# EUROPÄISCHE PATENTANMELDUNG

(11) **EP 1 705 900 A1**
(43) Veröffentlichungstag der Anmeldung: **27.09.2006**
(21) Anmeldenummer: 06005754.4
(22) Anmeldetag: 21.03.2006
(51) Int. Cl.: H04N 5/225, G03B 17/08

(54) **Kamera für den Aussenbereich**

(30) Priorität: 22.03.2005 DE 202005004675 U
(71) Anmelder: MEKRA Lang GmbH & Co. KG, 90765 Fürth (DE)
(72) Erfinder: Lang, Werner Dr., 91465 Ergersheim (DE); Bauer, Jochen, 91465 Ergersheim (DE); Ell, Martin, 91463 Dietersheim (DE)
(74) Vertreter: Winter, Brandl, Fürniss, Hübner Röss, Kaiser, Polte Partnerschaft Patent- und Rechtsanwaltskanzlei

(57) **Zusammenfassung**

Es wird eine Kamera für den Außenbereich angegeben, die selbst bei extremen Witterungsverhältnissen eine gleich bleibende Bildqualität gewährleistet. Bei den bekannten Kameras für den Außenbereich mit einem Aufnahmefenster aus Glas und einem Kameragehäuse aus Kunststoff ist bei sinkenden Temperaturen das Aufnahmefenster der kälteste Bereich in der Kamera und folglich kondensiert die in der Luft in dem Hohlraum zwischen Kameragehäuse und Kameramodul befindliche Luftfeuchtigkeit auf der Innenseite des Aufnahmefensters aus Glas. Dies ist auf die unterschiedlichen physikalischen Materialeigenschaften von Glas im Vergleich zu dem Kunststoff des Kameragehäuses zurückzuführen. Glas hat im Vergleich zu Kunststoffe eine wesentlich höhere Wärmeleitfähigkeit und auch eine höhere spezifische Wärmekapazität. Dadurch, dass das transparente Aufnahmefenster aus Kunststoff statt aus Glas besteht, wird vermieden, dass das Aufnahmefenster bei fallenden Temperaturen der kälteste Bereich der Kamera ist. Folglich wird auch die bevorzugte Kondensatbildung auf der Innenseite des Aufnahmefensters verhindert. Hierbei bestehen sowohl das Aufnahmefenster als auch das Kameragehäuse aus Kunststoff, d. h. aus Materialien mit gleichen oder sehr ähnlichen thermischen Eigenschaften, wie thermische Leitfähigkeit, spezifische Wärmekapazität und Wärmeausdehnungskoeffizient. Durch das Ausfüllen des Hohlraums zwischen Kameramodul und Kameragehäuse mit einer Vergussmasse, wird Feuchtigkeit enthaltende Luft vollständig aus dem Inneren des Kameragehäuses verdrängt. Folglich kann es auch zu keiner Kondensatabscheidung wo auch immer mehr kommen.

## Beschreibung

Die Erfindung betrifft eine Kamera für den Außenbereich gemäß dem Oberbegriff des Anspruchs 1.

An Kameras für den Außenbereich werden aufgrund der Witterungseinflüsse besondere Anforderungen gestellt. Bei auf dem Markt befindlichen Kameras, wie sie beispielsweise von der Anmelderin unter der Bezeichnung MCC (Mekra Color Camera) für Überwachungszwecke an außen an Nutzfahrzeugen vertrieben werden, ist das eigentliche Kameramodul in einem Kameragehäuse angeordnet. Dieses Kameragehäuse weist in "Blickrichtung" der Kamera eine Aufnahmeöffnung auf, die durch ein Aufnahmefenster aus Glas verschlossen wird. Das Kameramodul umfasst eine Kameraelektronik mit einem CCD-Modul sowie eine Kameraoptik. Die Kameraoptik ist säulenförmig ausgebildet und umfasst ein der Kameraelektronik zugewandtes erstes Ende und ein dem Aufnahmefenster zugewandtes zweites, freies Ende. Auf das freie Ende der Kameraoptik fällt Licht durch das transparente Aufnahmefenster von dem aufzunehmenden Objekt ein und wird durch die Kameraoptik auf den CCD-Modul geleitet.

Aufgrund der räumlichen Form des Kameramoduls und des Kameragehäuses verbleibt zwischen Kameragehäuse und Kameramodul ein Hohlraum. Bei Temperaturschwankungen und aufgrund der Luftfeuchtigkeit kommt es bei den bekannten Kameras für den Außenbereich in dem Hohlraum und insbesondere auf der Innenseite des Aufnahmefensters aus Glas und auf der hinter dem Aufnahmefenster liegenden Kameraoptik zu Kondensatbildung. Dieses Kondensat führt zum einen zu einer Verschlechterung der Bildqualität bis zur Unbrauchbarkeit und kann auch zu Korrosion in den Elektronikbauteilen der Kamera führen.

Auch bei durch Regen, Schnee und Nebel oder bei der Reinigung der Nutzfahrzeuge kann Feuchtigkeit über Undichtigkeiten zwischen dem Aufnahmefenster aus Glas und dem Kameragehäuse aus Kunststoff in das Kamerainnere gelangen und die Bildqualität beeinträchtigen.

Aus der DE 198 42 828 A1 ist ein Kameragehäuse bekannt in dem ein Bildsensor angeordnet ist. Das Gehäuse weist ein Licht-Eintrittsfenster auf, das durch eine Eingangsoptik in Form einer Linse abgedeckt ist. Das Gehäuse und die Eingangsoptik sind einstückig aus einem optischen Material hergestellt.

Aus der DE 101 09 787 A1 ist eine sehr preiswerte Digitalkamera bekannt, bei der ein digitaler Bildsensor in einem Gehäuse mit einem Licht-Eintrittsfenster angeordnet ist. Der digitale Bildsensor ist in eine transparente Vergussmasse eingegossen, die sich durch das Eintrittsfenster hindurch als konvexe Ausstülpung erstreckt und eine Linse bildet. Das zentrale Merkmal dieser bekannten Kamera besteht darin, dass außer dem optischen Material für die Vergussmasse kein anderes optisches Material verwendet wird. Durch ihre Einfachheit, insbesondere Einfachheit der Optik vor dem Bildsensor, ist diese bekannte Kamera zwar sehr preiswert, sie eignet sich aber nur für Bildaufnahmen aus der unmittelbaren Umgebung. Es ist beispielsweise die Verwendung als Aufsteck-Kamera an PCs angegeben. Diese bekannte Kamera ist nicht für die Anbringung an Nutzfahrzeuge im Außenbereich geeignet, da dort Bilder von mehrere Metern entfernten Objekten aufgenommen werden müssen.

Es ist daher Aufgabe der vorliegenden Erfindung, eine Kamera für den Außenbereich anzugeben, die selbst bei extremen Witterungsverhältnissen eine gleich bleibende Bildqualität gewährleistet.

Die Lösung dieser Aufgabe erfolgt durch die Merkmale des Anspruchs 1.

Bei den bekannten Kameras für den Außenbereich mit einem Aufnahmefenster aus Glas und einem Kameragehäuse aus Kunststoff ist bei sinkenden Temperaturen das Aufnahmefenster der kälteste Bereich in der Kamera und folglich kondensiert die in der Luft in dem Hohlraum zwischen Kameragehäuse und Kameramodul befindliche Luftfeuchtigkeit auf der Innenseite des Aufnahmefensters aus Glas. Dies ist auf die unterschiedlichen physikalischen Materialeigenschaften von Glas im Vergleich zu dem Kunststoff des Kameragehäuses zurückzuführen. Glas hat im Vergleich zu Kunststoffe eine wesentlich höhere Wärmeleitfähigkeit und auch eine höhere spezifische Wärmekapazität. Dadurch, dass das transparente Aufnahmefenster aus Kunststoff statt aus Glas besteht, wird vermieden, dass das Aufnahmefenster bei fallenden Temperaturen der kälteste Bereich der Kamera ist. Folglich wird auch die bevorzugte Kondensatbildung auf der Innenseite des Aufnahmefensters verhindert. Hierbei bestehen sowohl das Aufnahmefenster als auch das Kameragehäuse aus Kunststoff, d. h. aus Materialien mit gleichen oder sehr ähnlichen thermischen Eigenschaften, wie thermische Leitfähigkeit, spezifische Wärmekapazität und Wärmeausdehnungskoeffizient. Durch das Ausfüllen des Hohlraums zwischen Kameramodul und Kameragehäuse mit einer Vergussmasse, wird Feuchtigkeit enthaltende Luft vollständig aus dem Inneren des Kameragehäuses verdrängt. Folglich kann es auch zu keiner Kondensatabscheidung wo auch immer mehr kommen.

Gemäß einer bevorzugten Ausführungsform der Erfindung nach Anspruch 2 ist das transparente Aufnahmefenster aus Kunststoff mit dem Kameragehäuse aus Kunststoff im Randbereich der Aufnahmeöffnung laserverschweißt. Damit wird ein höher Dichtigkeit im Vergleich zu der Abdichtung zwischen Glas und Kunststoff erreicht.

Gemäß einer bevorzugten Ausführungsform der Erfindung nach Anspruch 3 ist das Aufnahmefenster und das Kameragehäuse einstückig aus transparentem Kunststoff ausgebildet. Damit werden Dichtigkeitsprobleme zwischen Kameragehäuse und Aufnahmefenster völlig eliminiert.

Gemäß einer weiteren bevorzugten Ausführungsform der Erfindung nach Anspruch 4 besitzt das Aufnahmefenster aus Kunststoff auf der Innenseite eine Ausnehmung oder Vertiefung, in die das zweite, freie Ende der Kameraoptik hineinragt. Durch diese Maßnahme wird das sich unmittelbar vor der Kameraoptik befindliche Luftvolumen deutlich reduziert und folglich kann bei fallenden Temperaturen auch kaum Kondensat aus diesem reduzierten Luftvolumen ausfallen und auf dem zweiten Ende der Kameraoptik oder in der Ausnehmung des Aufnahmefensters kondensieren.

Gemäß einer weiteren bevorzugten Ausführungsform der Erfindung nach Anspruch 5 besteht das Aufnahmefenster aus transparenter Vergussmasse. Damit kann das Aufnahmefenster beispielsweise mittels Spritzguss auf die bereits erkaltete Vergussmasse im übrigen Hohlraum aufgebracht werden. Die transparente Spritzguss bzw. Gussmasse des Aufnahmefensters wird hierbei im Randbereich des Aufnahmefensters zwischen der bereits erkalteten Vergussmasse Hohlraum zwischen Kameramodul und Kameragehäuse eingeklemmt. Aufgrund des Auf- bzw. Einbringens der transparenten Vergussmasse im zähflüssigen Zustand ergibt sich eine sehr dauerhafte und dichte Verbindung des Randbereichs des Aufnahmefensters und des Randbereichs der Aufnahmeöffnung. Insgesamt wird hierdurch die Dichtigkeit der Kamera wesentlich verbessert.

Gemäß einer weiteren vorteilhaften Ausgestaltung der Erfindung nach Anspruch 6 besteht die gesamte Vergussmasse aus dem gleichen transparenten Material, so dass das Vergießen des Hohlraums zwischen Kameragehäuse und -modul und das Übergießen des freien Endes der Kameraoptik und damit die Aufbringung des Aufnahmefensters in einem Arbeitsgang möglich ist.

Gemäß einer weiteren vorteilhaften Ausgestaltung der Erfindung nach Anspruch 7 ragt das freie, zweite Ende der Kameraoptik in die transparente Vergussmasse hinein. Hierdurch ist gewährleistet, dass die Kameraoptik auch nicht teilweise von nicht-transparenter Vergussmasse abgedeckt wird.

Gemäß einer bevorzugten Ausführungsform der Erfindung nach Anspruch 8 ist mit Ausnahme des in Aufnahmerichtung weisenden freien Endes der Kameraoptik die Kameraoptik von einer starren Schutzhülle umgeben. Diese starre Schutzhülle verhindert beim Ausgießen des Hohlraums zwischen Kameragehäuse und Kameramodul, dass die erkaltende Vergussmasse aufgrund von unterschiedlichen Wärmeausdehnungskoeffizienten zwischen Vergussmasse und Kameraoptik und die damit auftretenden thermischen Spannungen eine Beeinträchtigung der Funktion der Kameraoptik verursachen.

Weitere Einzelheiten, Merkmale und Vorteile der Erfindung ergeben sich aus der nachfolgenden Beschreibung einer bevorzugten Ausführungsform anhand der Zeichnung.

Es zeigt
Fig. 1 eine schematische Schnittdarstellung durch eine erste Ausführungsform der Erfindung;
Fig. 2 eine schematische Schnittdarstellung durch eine zweite Ausführungsform der Erfindung;
Fig. 3 eine schematische Schnittdarstellung durch eine dritte Ausführungsform der Erfindung; und
Fig.4 eine schematische Schnittdarstellung durch eine vierte Ausführungsform der Erfindung.

In den nachfolgend beschriebenen beispielhaften Ausführungsformen der Erfindung werden einander entsprechende Teile mit den gleichen Bezugszeichen bezeichnet.

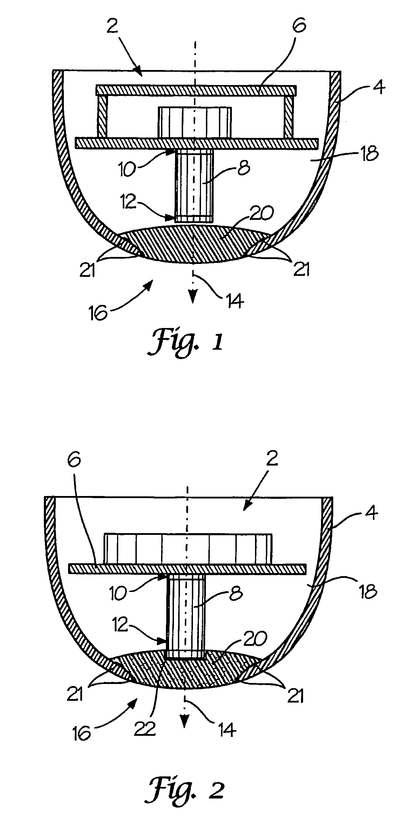

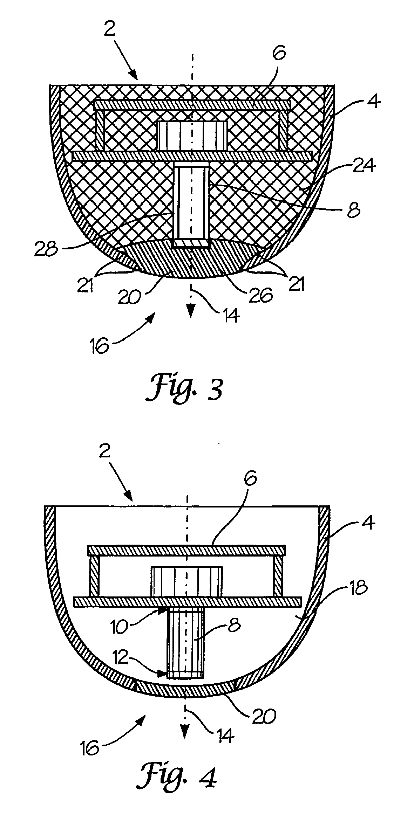

Fig. 1 zeigt eine erste Ausführungsform einer erfindungsgemäße Kamera mit einem Kameramodul 2, das in einem Kameragehäuse 4 angeordnet ist. Das Kameramodul 2 umfasst eine Kameraelektronik 6 und eine Kameraoptik 8. Die Kameraoptik 8 umfasst ein erstes der Kameraelektronik 6 zugewandtes Ende 10 und ein zweites, freies Ende 12, das auf ein nicht dargestelltes aufzunehmendes Objekt in eine Aufnahmerichtung 14 gerichtet ist. Über das erste Ende 10 ist die Kameraoptik 8 mit der Kameraelektronik 6 verbunden. Das Kameragehäuse 4 umfasst eine Aufnahmeöffnung 16, die den "Blick" des zweiten, freien Endes 12 der Kameraoptik 8 in Aufnahmerichtung 14 auf das aufzunehmende Objekt freigibt. Aufgrund der räumlichen Ausgestaltung des Kameramoduls 2 und des Kameragehäuses 4 ergibt sich zwischen Kameragehäuse 4 und Kameramodul 2 ein Hohlraum 18. Dieser Hohlraum 18 ist mit einer nicht dargestellten Vergussmasse aus Kunststoff ausgegossen, wie dies in Fig. 3 dargestellt ist. Die nicht dargestellte Vergussmasse kann durchsichtig oder undurchsichtig sein. Lediglich zwischen der Innenseite des Aufnahmefensters 20 und dem freien Ende 12 der Kameraoptik 8 verbleibt ein kleiner Hohlraum 19.

Die Aufnahmeöffnung 16 und das Kameragehäuse 4 wird durch ein transparentes Aufnahmefenster 20 aus Kunststoff flüssigkeits-, wasserdampf- und gasdicht abgeschlossen. Das Aufnahmefenster 20 ist linsenförmig und untergreift im Randbereich der Aufnahmeöffnung 16 das Kameragehäuse 4. Die dichte Verbindung zwischen dem Aufnahmefenster 20 aus Kunststoff und dem Kameragehäuse 4 aus Kunststoff erfolgt mittels Laserverschweißung. Das Bezugszeichen 21 bezeichnet in den Fig. 1 und 2 die hierdurch entstehende Laserschweißnaht. Anstelle von Laserverschweißung können auch andere Schweißverfahren und Verklebung zur Befestigung des Aufnahmefensters 20 genutzt werden. Unmittelbar hinter dem Aufnahmefenster ist die Kameraoptik 8 bzw. dessen freies Ende 12 angeordnet.

Da das Kameragehäuse 4 und das Aufnahmefenster 20 beide aus Kunststoffen bestehen, die hinsichtlich ihrer thermischen Eigenschaften sehr ähnlich sind, ist das Aufnahmefenster 20 nicht mehr die kälteste Komponente der Kamera. Folglich erfolgt auf der Innenseite des Aufnahmefensters 20 in dem kleinen Zwischenraum oder verbleibenden Hohlraum 19 zwischen dem Aufnahmefenster 20 und dem freien Ende 12 auch keine Kondensatabscheidung aus der Luft in dem verbleibenden Hohlraum 19.

Fig. 2 zeigt eine zweite Ausführungsform der Erfindung, die sich von der ersten Ausführungsform lediglich hinsichtlich des Aufnahmefensters 20 unterscheidet. Das transparente Aufnahmefenster 20 weist auf der Innenseite eine Ausnehmung oder Vertiefung 22 auf, die hinsichtlich ihrer Form der Form des freien Endes 12 der Kameraoptik 8 angepasst ist. Das freie Ende 12 der Kameraoptik 8 ragt in die Vertiefung 22 hinein. In den in Figuren 1 und 2 gezeigten Ausführungsformen besitzt die Kameraoptik eine kreiszylindrische Form und die Ausnehmung 22 ist eine entsprechend geformte kreiszylindrische Vertiefung. Diese Vertiefung 22 ist so dimensioniert, dass das freie Ende 12 der Kameraoptik mit minimalem Spiel in dieser Vertiefung 22 sitzt, so dass sich ein minimaler verbleibender Hohlraum 19 ergibt. Der Hohlraum 18 ist mit einer nicht dargestellten Vergussmasse aus Kunststoff ausgegossen, wie dies in Fig. 3 dargestellt ist. Die nicht dargestellte Vergussmasse kann durchsichtig oder undurchsichtig sein. Durch diese Anordnung wird das Luftvolumen in dem verbleibenden Hohlraum 19 zwischen dem freiem Ende 12 der Kameraoptik 8 und der Innenseite des Aufnahmefensters 20 ebenfalls minimiert. Folglich kann es noch weniger zu Kondensatbildung auf der Kameraoptik 8 oder auf der Innenseite des Aufnahmefensters 20 in der Ausnehmung 22 kommen.

Die Fig. 3 zeigt eine dritte Ausführungsform der Erfindung. Diese dritte Ausführungsform entspricht hinsichtlich Kameramodul 2 und Kameragehäuse 4 den vorstehend anhand von Fig. 1 und 2 beschriebenen Ausführungsformen. Im Gegensatz zu den beiden vorhergehenden Ausführungsformen ist hier dargestellt, dass der Hohlraum 18 durch eine Vergussmasse 24 ausgefüllt ist. Der Hohlraum 18 wird soweit mit Vergussmasse 24 auf- bzw. ausgefüllt, dass nur noch das freie Ende 12 der Kameraoptik 8 aus der Vergussmasse 18 herausragt. Der jetzt noch verbleibende Hohlraum 18 im Bereich der Aufnahmeöffnung 16 wird mit einer transparenten Vergussmasse 26 ausgegossen oder ausgefüllt. Die transparente Vergussmasse 26 umhüllt somit das zweite, freie Ende 12 der Kameraoptik 8, verschließt die Aufnahmeöffnung 16 in dem Kameragehäuse 4 und bildet somit in diesem Bereich das transparentes Aufnahmefenster 20.

Da die Vergussmasse 24 und die transparente Vergussmasse 26 den Hohlraum 18 vollständig ausfüllen, ist auch die Abdichtung der transparenten Vergussmasse 26 bzw. des Aufnahmefensters 20 gegenüber dem Kameragehäuse 4 im Randbereich der Aufnahmeöffnung 16 unkritisch. Ebenso wird durch die vollständige Ausfüllung des Hohlraums 18 durch die Vergussmassen 24 und 26 Luft mit darin enthaltener Feuchtigkeit vollständig aus dem Inneren des Kameragehäuses 4 verdrängt. Folglich kann es zu keiner die Bildqualität oder die Funktionsfähigkeit der Kameraelektronik beeinträchtigenden Kondensatbildung mehr kommen.

Damit die Vergussmasse 24 den Hohlraum 18 zwischen Kameragehäuse 4 und Kameramodul 2 ausfüllt, muss diese beim Ausgießen dünnflüssig, d.h. vergleichsweise heiß sein. Je nach verwendeter Vergussmasse 24 liegt die Temperatur der flüssigen Vergussmasse 24 beim Einfüllen in den Hohlraum 18 in einem Temperaturbereich zwischen 15°C und 250°C. Damit die beim Erkalten und Erstarren der Vergussmasse 24 auftretenden thermischen Spannungen die Kameraoptik 8 und insbesondere die optische Ausrichtung der Kameraoptik 8 nicht verändern oder beeinträchtigen, ist die Kameraoptik 8 von einer hühlsenförmigen zylindrischen starren Schutzhülle 28 umgeben. Die Schutzhülle 28 erstreckt sich von der Kameraelektronik 6 weg bis zu den freien Ende 12 der Kameraoptik 8 und gibt lediglich den "Blick" der Kameraoptik 8 bzw. des freien Endes 12 in Aufnahmerichtung 14 auf das aufzunehmende Objekt frei. Die starre Schutzhülle 28 verhindert, dass die beim Erstarren auftretenden thermischen Spannungen unmittelbar auf die Kameraoptik 8 einwirken. Die Kameraoptik 8 kommt daher nur im Bereich des Aufnahmefensters 20 mit der transparente Vergussmasse 26 direkt in Berührung.

Insbesondere im Bereich des Aufnahmefensters 20 kann die transparente Vergussmasse 26 mittels Spritzgussverfahren aufgebracht werden.

Wird ausschließlich transparente Vergussmasse 26 in den Hohlraum 18 eingefüllt, kann die das Ausgießen des Hohlraums 18 und die Ausbildung des Aufnahmefensters 20 in einem Arbeitsgang erfolgen.

Geeignet als Vergussmasse 24 sind alle Heiß- und Kalt-Vergussmassen, die keine negativen Auswirkungen auf die technischen und optische Eigenschaften der Kamera haben.

Fig. 4 zeigt eine vierte Ausführungsform der Erfindung, die sich von der ersten Ausführungsform nach Fig. 1 dadurch unterscheidet, dass das Aufnahmefenster 20 und das Kameragehäuse 4 einstückig aus transparentem Kunststoff hergestellt sind. Auch hierdurch wird verhindert, dass das Aufnahmefenster 20 kälter ist als das Kameragehäuse 4. Zusätzlich sind Dichtigkeitsprobleme zwischen Kameragehäuse 4 und Aufnahmefenster 20 ausgeschlossen.

Entsprechend der Ausführungsform nach Fig. 3 wird der Hohlraum 18 im Inneren der Kamera mit transparenter oder nicht-transparenter Vergussmasse ausgegossen (nicht dargestellt). Lediglich der Bereich zwischen freiem Ende 12 der Kameraoptik 8 und dem Aufnahmefenster 20 - Hohlraum 19 - muss entweder freigelassen oder mit transparenter Vergussmasse ausgegossen werden. Alternativ kann das Aufnahmefenster 20 auch entsprechend der Ausführungsform nach Fig. 2 mit einer Vertiefung auf der Innenseite versehen sein, in die das freie Ende 12 der Kameraoptik 8 hineinragt.

### Bezugszeichenliste

- 2: Kameramodul
- 4: Kameragehäuse
- 6: Kameraelektronik
- 8: Kameraoptik
- 10: erstes Ende von 8
- 12: zweites, freies Ende von 8
- 14: Aufnahmerichtung
- 16: Aufnahmeöffnung
- 18: Hohlraum
- 19: verbleibender Hohlraum

- 20: Aufnahmefenster
- 21: Laserschweißnaht
- 22: Ausnehmung
- 24: Vergussmasse
- 26: transparente Vergussmasse
- 28: Schutzhülle

## Patentansprüche

1. Kamera für den Außenbereich, mit
einem Kameramodul (2), das eine Kameraelektronik (6) und eine Kameraoptik (8) umfasst, wobei die Kameraoptik (8) ein der Kameraelektronik (6) zugewandtes erstes Ende (10) und ein in Aufnahmerichtung (14) weisendes zweites Ende (12) aufweist und wobei die Kameraoptik (8) mit dem ersten Ende (10) mit der Kameraelektronik (6) verbunden ist,
einem Kameragehäuse (4) mit einem Hohlraum (18) in dem das Kameramodul (2) angeordnet ist, wobei das Kameragehäuse (4) in Aufnahmerichtung (14) eine Aufnahmeöffnung (16) aufweist und vorzugsweise aus Kunststoff besteht, und
einem die Aufnahmeöffnung (16) abschließenden, transparenten Aufnahmefenster (20), hinter der das zweite Ende (12) der Kameraoptik (8) angeordnet ist,
**dadurch gekennzeichnet,**
**dass** das transparente Aufnahmefenster (20) aus Kunststoff besteht und
**dass** der Hohlraum (16) zwischen Kameragehäuse (4) und Kameramodul (2) mit einer Vergussmasse (24) aus Kunststoff ausgegossen ist.

2. Kamera für den Außenbereich nach Anspruch 1, **dadurch gekennzeichnet, dass** das transparente Aufnahmefenster (20) mit dem Kameragehäuse (4) laserverschweißt ist.

3. Kamera für den Außenbereich nach Anspruch 1, **dadurch gekennzeichnet, dass** das Kameragehäuse (4) und das transparente Aufnahmefenster (20) einstückig ausgebildet sind und aus transparentem Kunststoff bestehen.

4. Kamera für den Außenbereich nach einem der vorhergehenden Ansprüche, **dadurch gekennzeichnet, dass** das transparente Aufnahmefenster (20) auf der Innenseite eine Vertiefung (22) aufweist, deren Form dem zweiten Ende (12) der Kameraoptik (8) entspricht, und
dass das zweite Ende (12) der Kameraoptik (8) in die Vertiefung (22) in dem transparenten Aufnahmefenster (20) hineinragt.

5. Kamera für den Außenbereich nach einem der vorhergehenden Ansprüche, **dadurch gekennzeichnet, dass** das Aufnahmefenster (20) aus transparenter Vergussmasse (26) besteht.

6. Kamera für den Außenbereich nach Anspruch 5, **dadurch gekennzeichnet, dass** die Vergussmasse (24) im inneren des Kameragehäuses (4) die gleiche Vergussmasse (18) ist, aus der das transparente Aufnahmefenster besteht.

7. Kamera für den Außenbereich nach einem der vorhergehenden Ansprüche 5 bis 6, **dadurch gekennzeichnet, dass** die transparente Vergussmasse (26) des transparenten Aufnahmefensters (20) das zweite Ende (12) der Kameraoptik (8) umgibt.

8. Kamera für den Außenbereich nach einem der vorhergehenden Ansprüche, **dadurch gekennzeichnet, dass** die Kameraoptik (8) von einer das zweite Ende (12) der Kameraoptik (8) freilassenden Schutzhülle (28) umgeben ist.
